# EUROPEAN PATENT SPECIFICATION

(11) **EP 2 073 353 B1**
(45) Date of publication and mention of the grant of the patent: **08.11.2017**
(21) Application number: 08254104.6
(22) Date of filing: 22.12.2008
(51) Int. Cl.: H02K 1/27

(54) **Rotor assembly for an electric motor**
Rotoranordnung für einen elektrischen Motor
Ensemble rotor pour un moteur électrique

(30) Priority: 20.12.2007 US 961081
(43) Date of publication of application: 24.06.2009
(73) Proprietor: Hamilton Sundstrand Corporation, Windsor Locks, CT 06096-1010 (US)
(72) Inventor: Rasmussen, Roy D., Rockford, IL 61108 (US); Legros, Craig R., Rockford, IL 61108 (US)
(74) Representative: Taylor, Adam David

(56) References cited:
- WO-A2-03/092140
- DE-A1- 10 060 121

## Description

### BACKGROUND OF THE INVENTION

This invention generally relates to an electric motor. More particularly, this invention relates to a rotor and method of fabricating a rotor for an electric motor.

Conventional permanent magnet electric motors include a rotor assembly having pole permanent magnets bonded to a rotor hub and contained within a non-magnetic metal sleeve. Conventional rotor assemblies have included a non-magnetic material such as for example plastic between each of the permanent magnets to maintain a desired orientation of the permanent magnets on the rotor hub. An interference fit between the metal sleeve and permanent magnets holds the permanent magnets tightly against the rotor.

In conventional rotor assemblies, the metal sleeve remains unsupported by the underlying permanent magnets in areas and air gaps between adjacent permanent magnets. The plastic material does not provide desired support of the metal sleeve. These unsupported regions generate bending stresses caused by cyclical centrifugal forces produced during operation. The bending stresses result from an initial cording of the sleeve between adjacent permanent magnets across an unsupported region. The cording results in a flat spot between each of the permanent magnets. The unsupported flat spot expands outwardly in response to centrifugal forces produced during high speed rotation. This fluctuating movement between the corded condition and the expanded condition creates fatigue stresses in the metal sleeve that reduce operational life. Further, dissimilar materials between the permanent magnets generate non-uniform thermal expansion against the sleeve also creating unbalanced stresses on the metal sleeve.

A conventional solution for improving rotor assembly life is to use exotic and relatively expensive grades of metal for the metal sleeve with higher fatigue strength. Such expensive grades of material are prohibitively expensive and are difficult to manufacture and assemble.

Accordingly, it is desirable to design and develop a rotor that does not require expensive materials to provide a desired operational life.

WO 03/092140 discloses the features of the pre-characterizing portion of claim 1.

### SUMMARY OF THE INVENTION

In one aspect the invention provides an electric motor assembly comprising: a stator; and a rotor rotatable relative to the stator including a rotor hub, a plurality of pole magnets, a sleeve disposed about the plurality of pole magnets, and a spacer disposed between each adjacent two of the plurality of pole magnets, wherein the spacer material is in a non-magnetized state, and characterized in that each spacer is made of the same material as the plurality of pole magnets.

In another aspect the invention provides a rotor assembly for an electric motor comprising: a rotor hub rotatable about an axis and including at least four sides; a plurality of permanent magnets disposed on each of the at least four sides; a sleeve pressed over the plurality of permanent magnets; and a spacer between each adjacent two of the plurality of permanent magnets, wherein the material for the spacer is in a non- magnetized state, and characterised in that: the sleeve comprises non-magnetic steel; and each spacer is made from the same material as the plurality of permanent magnets. Preferred embodiments are described in the dependent claims. These and other features of the present invention can be best understood from the following specification and drawings, of which the following is a brief description.

### BRIEF DESCRIPTION OF THE DRAWINGS

Figure 1 is a cross-sectional view of an example electric motor including the example rotor.
Figure 2 is a perspective view of the example rotor assembly.

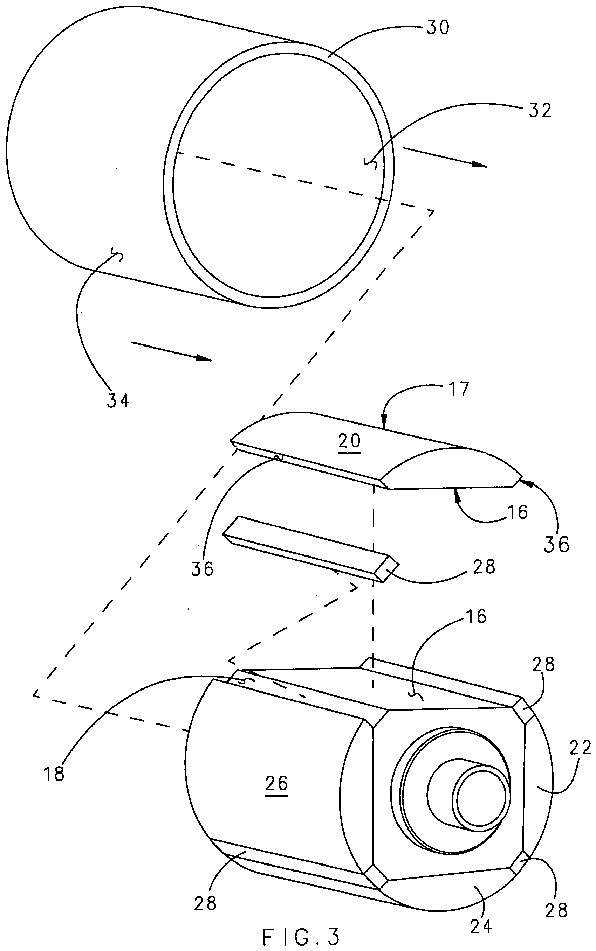

Figure 3 is an exploded view of the example rotor assembly with the sleeve removed from about the permanent magnets.

### DETAILED DESCRIPTION OF THE PREFERRED EMBODIMENT

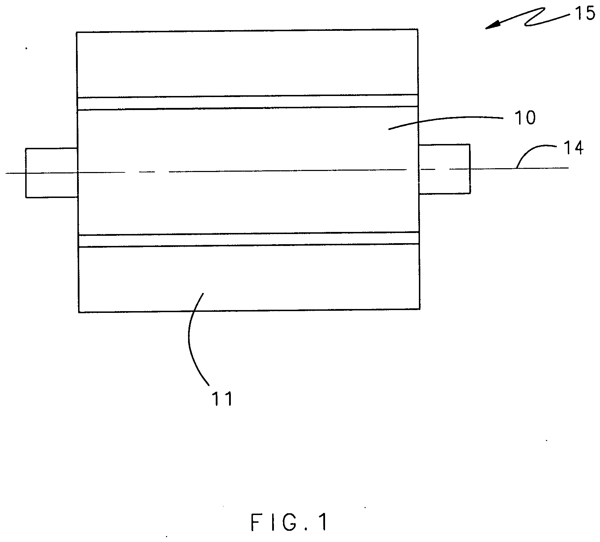

Referring to Figure 1, an example electric motor assembly 15 includes a stator 11 and a rotor assembly 10 that rotates about an axis 14 relative to the stator 11.

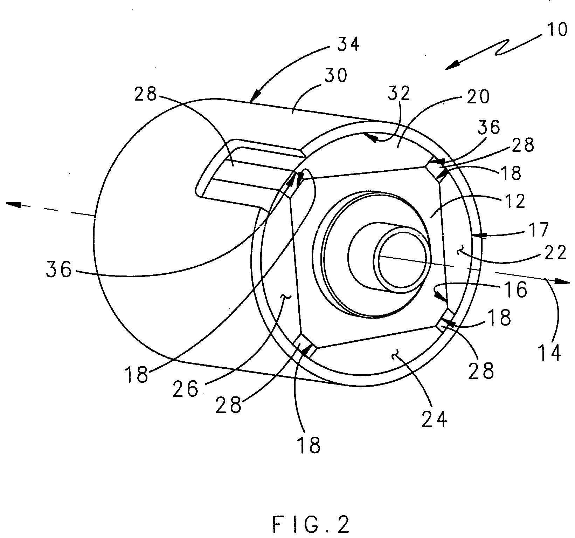

Referring to Figure 2, the rotor assembly 10 includes a rotor hub 12 that supports permanent magnets 20, 22, 24, 26. The permanent magnets 20, 22, 24, 26 are supported on the rotor hub 12 and contained within a non-magnetic metal sleeve 30, e.g. non-magnetic steel. The non-magnetic metal sleeve 30 is installed over the permanent magnets 20, 22, 24 and 26 in a high interference fit to maintain a desired contact pressure between the magnets 20, 22, 24 and 26 and the rotor hub 12. High contact pressure is used to provide desired torque production from the electric motor assembly 15

Spacers 28 are disposed between each of the permanent magnets 20, 22, 24 and 26. The spacers 28 are comprised of the same material used for the permanent magnets 20, 22, 24, 26 except in a non-magnetic state. Because the permanent magnets 20, 22, 24, 26 and spacers 28 are fabricated from the same material, they each have the same coefficient of thermal expansion. Therefore, the permanent magnets 20, 22, 24, 26 and the spacers 28 expand at the same rate and any expansion caused by heating of the magnets 20, 22, 24, 26 and spacers 28 results in a pressure uniform about the inner circumference of the sleeve 30. Because the metal sleeve 30 is supported along the entire inner surface 32, non-uniform stresses are substantially eliminated and this increases the operational life of the metal sleeve 30.

Each of the permanent magnets 20, 22, 24, 26 includes a flat surface 16 that fits to the rotor hub 12 and a radially curved surface 17 that corresponds to the internal radius of the metal sleeve 30. Sides 36 of each of the permanent magnets 20, 22, 24, 26 are disposed adjacent each of the spacers 28. The example sides 36 comprise a surface that is transverse to the inner surface 32 of the metal sleeve 30.

The rotor 12 includes a corresponding chamfered surface 18 on which the spacers 28 are supported. The spacers 28 are substantially a rectangular shaped block that extends the axial length of the sleeve 30. The width of the spacer 28 matches the width of the chamfered surface 18 of the rotor hub 12. The chamfered sides 36 of the permanent magnets 20, 22, 24, 26 and the rotor hub 12 both simplify construction of the spacer 28 and provide the desired magnetic flux path between magnets 20, 22, 24, 26.

The example permanent magnets 20, 22, 24, 26 are fabricated from a Samarian cobalt material that is magnetized utilizing known techniques and processes. The spacers 18 are also fabricated from the Samarian cobalt material except they are not in a magnetized state. The Samarian cobalt material is only one material that may be used within the contemplation of this invention. Other known magnetic material could also be used for the permanent magnets 20, 22, 24, 26 and the spacers 28.

The sleeve 30 is fabricated from a non-magnetic material such as for example Inconel 718 or other non-magnetic metal materials. Other materials commonly used for fabrication of a rotor assembly may also be used for fabrication of the metal sleeve.

Whilst a hub is shown having four sides, with four magnets and spacers, a greater number could be employed.

Accordingly the disclosed rotor assembly 10 supports substantially the entire inner circumference 32 of the metal sleeve 30 to greatly reduce bending stresses caused by unsupported sections during operation and therefore does not require expensive and difficult to obtain materials. Further the spacers 28 are fabricated from a material that is the same as the material of the permanent magnets such that any thermal expansion occurs uniformly over the entire inner circumference of the metal sleeve. The scope is defined by the claims.

## Claims

1. An electric motor assembly (15) comprising:
a stator (11); and
a rotor (10) rotatable relative to the stator including a rotor hub (12), a plurality of pole magnets (20, 22, 24, 26), a sleeve (30) disposed about the plurality of pole magnets, and a spacer (28) disposed between each adjacent two of the plurality of pole magnets, wherein the spacer material is in a non-magnetized state, and **characterized in that** each spacer is made of the same material as the plurality of pole magnets.

2. The assembly as recited in claim 1, wherein the sleeve (30) comprises a non-magnetic metal material.

3. The assembly as recited in claim 1 or 2, wherein a fit between the sleeve (30) and the plurality of pole magnets (20, 22, 24, 26) comprises a high interference fit.

4. The assembly as recited in claim 1, 2 or 3, wherein the fit between the spacers (28) and the sleeve (30) comprises a high interference fit.

5. The assembly as recited in claim 1, 2, 3 or 4 wherein the spacers (28) and the plurality of pole magnets (20, 22, 24, 26) support the sleeve's entire inner circumference (32).

6. The assembly as recited in any preceding claim, wherein each of the plurality of pole magnets includes a chamfered circumferential end (36) adjacent one of the spacers (28).

7. The assembly as recited in any preceding claim, wherein the rotor includes at least four corners that comprise a chamfer (18), and the spacers (28) are disposed between the chamfer of the rotor and the sleeve (30).

8. A rotor assembly (10) for an electric motor (15) comprising:
a rotor hub (12) rotatable about an axis (14) and including at least four sides;
a plurality of permanent magnets (20, 22, 24, 26) disposed on each of the at least four sides;
a sleeve (30) pressed over the plurality of permanent magnets; and
a spacer (28) between each adjacent two of the plurality of permanent magnets, wherein the material for the spacer is in a non-magnetized state,
and **characterised in that**:
the sleeve comprises non-magnetic steel; and
each spacer is made from the same material as the plurality of permanent magnets.

9. The assembly as recited in claim 8, wherein the rotor hub (12) includes a chamfered surface (18) between each of the at least four sides, and the spacer is disposed between the chamfered surface and the sleeve.

10. The assembly as recited in claim 8 or 9, wherein each of the plurality of permanent magnets includes a chamfered surface (36) adjacent the spacer.

11. The assembly as recited in claim 8, 9 or 10 wherein an interface between the sleeve (30), the plurality of permanent magnets (20, 22, 24, 26) and the spacer (28) is a high interference fit.

12. The assembly as recited in claim 8, 9, 10 or 11 wherein the sleeve (30) is radially supported about its entire inner circumference (32) by the plurality of permanent magnets and the spacers.

13. The assembly as recited in any of claims 8 to 12, wherein the plurality of permanent magnets and the spacers are of an axial length at least as long as the sleeve (30).

## Patentansprüche

1. Anordnung für einen elektrischen Motor (15), die Folgendes umfasst:
einen Stator (11); und
einen Rotor (10), der relativ zum Stator drehbar ist und der eine Rotornabe (12), eine Vielzahl von Polmagneten (20, 22, 24, 26), eine Hülle (30), die um die Vielzahl von Polmagneten angeordnet ist, und einen Abstandhalter (28), der zwischen jeden zwei benachbarten der Vielzahl von Polmagneten angeordnet ist, aufweist, wobei das Abstandshalter-Material sich in einem nicht-magnetisierten Zustand befindet und **dadurch gekennzeichnet ist, dass** jeder Abstandhalter aus dem gleichen Material wie die Vielzahl an Magneten hergestellt ist.

2. Anordnung nach Anspruch 1, wobei die Hülle (30) ein nicht-magnetisches Metallmaterial umfasst.

3. Anordnung nach Anspruch 1 oder 2, wobei eine Passung zwischen der Hülle (30) und der Vielzahl von Polmagneten (20, 22, 24, 26) eine hohe Presspassung umfasst.

4. Anordnung nach Anspruch 1, 2 oder 3, wonach die Passung zwischen den Abstandhaltern (28) und der Hülle (30) eine hohe Presspassung umfasst.

5. Anordnung nach Anspruch 1, 2, 3 oder 4, wobei die Abstandhalter (28) und die Vielzahl der Polmagneten (20, 22, 24, 26) den gesamten Innendurchmesser (32) der Hülle tragen.

6. Anordnung nach einem der vorgehenden Ansprüche, wobei jeder der Vielzahl von Polmagneten ein abgeschrägtes Umfangsende (36) benachbart zu einem der Abstandhalter (28) aufweist.

7. Anordnung nach einem der vorgehenden Ansprüche, wobei der Rotor mindestens vier Ecken aufweist die eine Fase (18) umfassen und die Abstandhalter (28) zwischen der Fase des Rotors und der Hülle (30) angeordnet sind.

8. Rotoranordnung (10) für einen Elektromotor (15), die Folgendes umfasst:
eine Rotornabe (12), die um eine Achse (14) drehbar ist und mindestens vier Seiten aufweist;
eine Vielzahl an Permanentmagneten (20, 22, 24, 26), die auf jeder der mindestens vier Seiten angeordnet sind;
eine Hülle (30), die über die Vielzahl von Permanentmagneten gepresst ist, und
einen Abstandhalter (28) zwischen jeweils zwei benachbarten der Vielzahl von Permanentmagneten, wobei sich das Material für die Abstandhalter in einem nicht-magnetisierten Zustand befindet,
und **dadurch gekennzeichnet ist, dass**:
die Hülle nicht-magnetischen Stahl umfasst; und
jeder Abstandhalter aus demselben Material wie die Vielzahl von Permanentmagneten hergestellt ist.

9. Anordnung nach Anspruch 8, wobei die Rotornabe (12) zwischen jeder der mindestens vier Seiten eine abgeschrägte Oberfläche (18) aufweist, und der Abstandhalter zwischen der abgeschrägten Oberfläche und der Hülle angeordnet ist.

10. Anordnung nach Anspruch 8 oder 9, wobei jeder der Vielzahl von Permanentmagneten eine dem Abstandhalter benachbarte abgeschrägte Oberfläche (36) aufweist.

11. Anordnung nach Anspruch 8, 9 oder 10, wobei eine Schnittstelle zwischen der Hülle (30), der Vielzahl von Permanentmagneten (20, 22, 24, 26) und dem Abstandhalter (28) eine hohe Presspassung ist.

12. Anordnung nach Anspruch 8, 9, 10 oder 11, wobei die Hülle (30) radial um den gesamten Innenumfang (32) von der Vielzahl der Permanentmagneten und den Abstandhaltern gestützt wird.

13. Anordnung nach einem der vorgehenden Ansprüche 8 bis 12, wobei die Vielzahl von Permanentmagneten und die Abstandhalter eine Achsenlänge haben, die mindestens der Länge der Hülle (30) entspricht.

## Revendications

1. Ensemble moteur électrique (15) comprenant :
un stator (11) ; et
un rotor (10) rotatif par rapport au stator comprenant un moyeu de rotor (12), une pluralité d'aimants polaires (20, 22, 24, 26), un manchon (30) disposé autour de la pluralité d'aimants polaires, et un espaceur (28) disposé entre chacun des deux aimants adjacents de la pluralité d'aimants polaires, dans lequel le matériau de l'espaceur est dans un état non magnétisé, et **caractérisé en ce que** chaque espaceur est réalisé dans le même matériau que la pluralité d'aimants polaires.

2. Ensemble selon la revendication 1, dans lequel le manchon (30) comprend un matériau métallique non-magnétique.

3. Ensemble selon la revendication 1 ou 2, dans lequel un ajustement entre le manchon (30) et la pluralité d'aimants polaires (20, 22, 24, 26) comprend un ajustement à interférence élevée.

4. Ensemble selon la revendication 1, 2 ou 3, dans lequel l'ajustement entre les espaceurs (28) et le manchon (30) comprend un ajustement à interférence élevée.

5. Ensemble selon la revendication 1, 2, 3 ou 4 dans lequel les espaceurs (28) et la pluralité d'aimants polaires (20, 22, 24, 26) supportent toute la circonférence intérieure du manchon (32).

6. Ensemble selon une quelconque revendication précédente, dans lequel chacun de la pluralité d'aimants polaires comprend une extrémité circonférentielle chanfreinée (36) adjacente à un des espaceurs (28).

7. Ensemble selon une quelconque revendication précédente, dans lequel le rotor comprend au moins quatre coins qui comprennent un chanfrein (18), et les espaceurs (28) sont disposés entre le chanfrein du rotor et le manchon (30).

8. Ensemble rotor (10) pour un moteur électrique (15) comprenant :
un moyeu de rotor (12) rotatif autour d'un axe (14) et comprenant au moins quatre côtés ;
une pluralité d'aimants permanents (20, 22, 24, 26) disposés sur chacun des au moins quatre côtés ;
un manchon (30) pressé sur la pluralité d'aimants permanents ; et
un espaceur (28) entre chacun des deux aimants adjacents de la pluralité d'aimants permanents, dans lequel le matériau de l'espaceur est dans un état non magnétisé,
et **caractérisé en ce que** :
le manchon comprend un acier non magnétique ; et
chaque espaceur est réalisé dans le même matériau que la pluralité d'aimants permanents.

9. Ensemble selon la revendication 8, dans lequel le moyeu de rotor (12) comprend une surface chanfreinée (18) entre chacun des au moins quatre côtés, et l'espaceur est disposé entre la surface chanfreinée et le manchon.

10. Ensemble selon la revendication 8 ou 9, dans lequel chacun de la pluralité d'aimants permanents comprend une surface chanfreinée (36) adjacente à l'espaceur.

11. Ensemble selon la revendication 8, 9 ou 10 dans lequel une interface entre le manchon (30), la pluralité d'aimants permanents (20, 22, 24, 26) et l'espaceur (26) est un ajustement à interférence élevée.

12. Ensemble selon la revendication 8, 9, 10 ou 11 dans lequel le manchon (30) est supporté radialement autour de toute sa circonférence intérieure (32) par la pluralité d'aimants permanents et les espaceurs.

13. Ensemble selon l'une quelconque des revendications 8 à 12, dans lequel la pluralité d'aimants permanents et les espaceurs sont d'une longueur axiale au moins égale à celle du manchon (30).
